# EUROPEAN PATENT APPLICATION

(11) **EP 2 469 851 A1**
(43) Date of publication of application: **27.06.2012**
(21) Application number: 10788731.7
(22) Date of filing: 27.04.2010
(51) Int. Cl.: H04N 7/14, H04L 29/06

(54) **SYSTEM AND METHOD FOR GENERATING INTERACTIVE VOICE AND VIDEO RESPONSE MENU**

(30) Priority: 27.10.2009 CN 200910208719
(71) Applicant: ZTE Corporation, Shenzhen, Guangdong 518057 (CN)
(72) Inventor: LIAO, Xin, Shenzhen Guangdong 518057 (CN); LI, Manhai, Shenzhen Guangdong 518057 (CN); ZHOU, Longjiang, Shenzhen Guangdong 518057 (CN); Shen, Yuna, Shenzhen Guangdong 518057 (CN)
(74) Representative: South, Nicholas Geoffrey
(86) International application number: PCT/CN2010/072248
(87) International publication number: WO 2010/145335

(57) **Abstract**

The present invention discloses are a system and a method for generating an Interactive Voice and Video Response (IVVR) menu, and the above system comprises: an acquiring unit, adapted to acquire files uploaded by a user terminal, wherein the uploaded files comprise a first file and a second file, with the first file comprising a video file and/or a picture file, and the second file comprising an audio file and/or a text file; a video processing unit, adapted to convert the first file uploaded by the user terminal into a first predetermined format video stream; an audio processing unit, adapted to convert the second file uploaded by the user terminal into a second predetermined format audio stream; and a menu synthesizing unit, adapted to generate the IVVR menu with the video stream and the audio stream. According to the technical solution provided by the present invention, the problems in the related art that the IVVR menu is made offline which cause low flexibility and large limitation are solved, thus it is convenient for users to make the IVVR menu.

## Description

### Field of the Invention

The present invention relates to communication field, and in particular to a system and a method for generating an Interactive Voice and Video Response (IVVR) menu.

### Background of the Invention

The Interactive Voice and Video Response (IVVR) as a new value-added service of wireless voice and video response is being promoted widely with the rapid development of the 3G The video telephone users acquire the required information or participate in the interactive services by dialing a specified number, and the video telephone's "interactive" type function is highlighted by way of the video and voice characteristics.

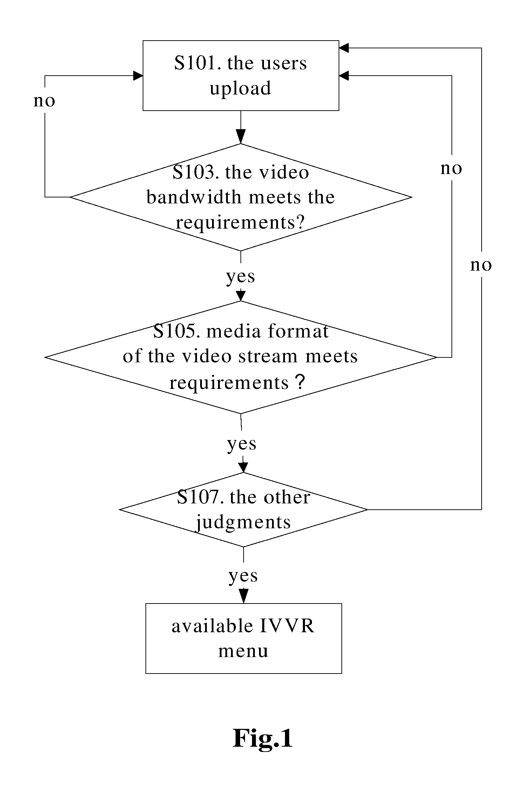

However, the existing method for making the IVVR is relatively complex, which can refer to Fig. 1 specifically.

Fig. 1 is a flowchart of a method for generating an IVVR menu in the related art. As shown in Fig. 1, the flow mainly comprises the following steps (step S101 to step S107).

Step S101: the users have first made a resource using DIY software, which needs to be uploaded to a server through the Internet.

Step S103: an IVVR system judges whether the total video bandwidth of single channel in the resource meets the requirement (namely, whether less than 64 K), and if the judgment result is yes, step S105 is executed, otherwise, step S107 is executed.

Step S105: the IVVR system judges whether the resource uploaded by the users is a QCIF video stream, and if the judgment result is yes, then step S107 is executed, otherwise, return to execute step S101.

Step S107: the other judgments except the above judgments are executed. If the judgment result is no, then the users need to re-upload the resource or to convert the resource by the system and return to execute step S101, and if the judgment result is yes, then the upload is successful.

Therefore, it can be seen from the implementation principle of the above conventional art that the following deficiencies exist in the existing method for generating the IVVR:
(1) Because the making of the IVVR menu is offline, the flexibility is relatively low and the limitation is relatively large.
(2) The producer manually processes the video and audio synthesis in the IVVR menu, which spends a lot of making time and energy.
(3) It is very likely that the resource made offline does not meet the requirements of the IVVR system, and then it need to be re-uploaded by the users or to be re-converted by the system.

### Summary of the invention

The present invention provides an improved system and a method for generating an IVVR menu, so as to at least solve the above problems.

A system for generating an interactive voice and video response menu is provided according to one aspect of the present invention, wherein the system comprises: an acquiring unit, adapted to acquire files uploaded by a user terminal, wherein the uploaded files comprise a first file and a second file, with the first file comprising a video file and/or a picture file, and the second file comprising an audio file and/or a text file; a video processing unit, adapted to convert the first file uploaded by the user terminal into a first predetermined format video stream; an audio processing unit, adapted to convert the second file uploaded by the user terminal into a second predetermined format audio stream; and a menu synthesizing unit, adapted to generate the IVVR menu with the video stream and the audio stream.

A method for generating an interactive voice and video response menu is provided according to another aspect of the present invention, wherein the method comprises: acquiring, by a system for generating the IVVR menu, files uploaded by a user terminal, wherein the files comprise a first file and a second file, with the first file comprising a video file and/or a picture file, and the second file comprising an audio file and/or a text file; converting, by an system for generating the IVVR menu, the first file uploaded by the user terminal into a first predetermined format video stream and converting the second file uploaded by the user terminal into a second predetermined format video stream; and generating, by the system for generating the IVVR menu, the IVVR menu with the video stream and the audio stream.

By the present invention, the users only need to call into the system for generating an IVVR menu, and then the IVVR menu can be automatically generated by uploading the video file, the audio file, the picture file or the text file, which can solve the problems in the related art that the IVVR menu is made offline which cause low flexibility, large limitation and the possibility of not meeting the requirements of the IVVR system, thus improving the flexibility, reducing the limitation and being convenient for users to make the IVVR menu.

Other features and advantages of the present invention will be described in the following description, and partly become obvious from the description, or be understood by implementing the present invention. The objects and other advantages of the present invention will be realized and obtained through the structures specially indicated by the description, claims and drawings.

### Brief Description of the drawings

The drawings illustrated herein provide a further understanding of the present invention and form a part of the present application. The exemplary embodiments and the description thereof are used to explain the present invention without unduly limiting the scope of the present invention. In the drawings:
Fig. 1 is a flowchart of a method for generating an IVVR menu in the related art;
Fig. 2 is a structural block diagram of a system for generating an IVVR menu according to an embodiment of the present invention;
Fig. 3 is a structural block diagram of a system for generating an IVVR menu according to a preferred embodiment of the present invention;
Fig. 4 is a flowchart of a method for generating an IVVR menu according to an embodiment of the present invention; and
Fig. 5 is a flowchart of a method for generating an IVVR menu according to a preferred embodiment of the present invention.

### Detailed Description of Embodiments

It needs to be noted that the embodiments and the features of the embodiments in the present application can be combined with each other under the circumstances that there is no conflict. The present invention is described in detail with reference to the accompanying drawings and in combination with the embodiments hereinafter.

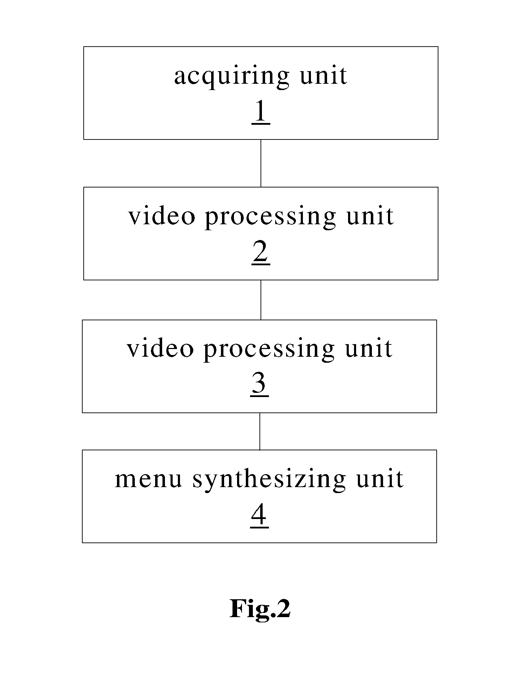

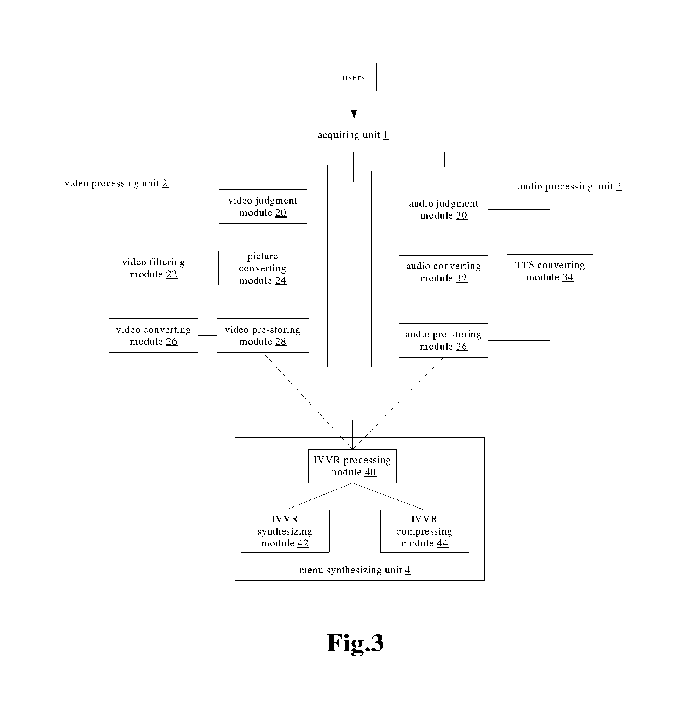

Fig. 2 is a structural block diagram of a system for generating an IVVR menu according to an embodiment of the present invention. Fig. 3 is a structural block diagram of a system for generating an IVVR menu according to a preferred embodiment of the present invention. As shown in Fig. 2, the system for generating the IVVR menu according to the embodiment of the present invention comprises: an acquiring unit 1, a video processing unit 2, an audio processing unit 3 and a menu synthesizing unit 4. The description hereinafter will be given in combination with Fig. 3.

The acquiring unit 1 is adapted to acquire files uploaded by a user terminal, wherein the uploaded files comprise a first file and a second file, with the first file comprising a video file and/or a picture file, and the second file comprising an audio file and/or a text file.

During the process of practical implementation, the above acquiring unit 1 can provide a voice interactive interface to the users by way of the service guide, so as to guide the users to upload the required file for generating the IVVR menu according to a certain logic flow, and return the file to the video processing unit and the audio processing unit.

In this case, the above acquiring unit 1 also needs to add a video number and an audio number in the video file and the audio file respectively and send these files to the video processing unit 2 and the audio process unit 3 respectively.

The video processing unit 2, connected to the acquiring unit 1, is adapted to convert the first file uploaded by the user terminal into a first predetermined format video stream.

Preferably, the video processing unit 2 is adapted to acquire a video stream in the first file, add a time synchronization mark into the video stream, convert the video stream with the time synchronization mark into the first predetermined format video stream, and store the video stream according to the video number.

Preferably, as shown in Fig. 3, the video processing unit 2 comprises: a video judgment module 20, a video filtering module 22, a video converting module 26 and a video pre-storing module 28.

The video judgment module 20 is adapted to judge whether the first file comprises the video file, and if the judgment result is yes, send the video file to the video filtering module 22.

Preferably, if the first file comprises an unrecognized file, the video judgment module 20 will return the judgment result to a service guide module or will not carry out any processing for the file.

The video filtering module 22 is adapted to filter the input video file to acquire a pure video stream, and send the pure video stream to the video converting module 26;
the video converting module 26, connected to the video filtering module 22, is adapted to add the time synchronization mark into the inputted pure video stream, convert the pure video stream with the time synchronization mark into the first predetermined format video stream, and output the first predetermined format video stream to the video pre-storing module 28; and
the video pre-storing module 28, connected to the video converting module 26, is adapted to acquire the video number of the inputted first predetermined format video stream, and store the video stream according to the video number.

Preferably, the video processing unit 2 may further comprise a picture converting module 24, wherein
the video judgment module 20 is further adapted to judge whether the first file comprises the picture file, and if the judgment result is yes, send the picture file to the picture converting module 24;
the picture converting module 24 is adapted to sort the inputted picture file according to a predetermined frame interval to form the pure video stream, add the time synchronization mark into the pure video stream, convert the pure video stream with the time synchronization mark into the first predetermined format video stream, and output the first predetermined format video stream to the video pre-storing module 28; and
the video pre-storing module 28 is further adapted to acquire the video number of the first predetermined format video stream inputted by the picture converting module 24, and store the video stream according to the video number.

The audio processing unit 3, connected to the acquiring unit 1, is adapted to convert the second file uploaded by the user terminal into a second predetermined format audio stream.

Preferably, the audio processing unit 3 is adapted to acquire an audio stream in the second file, add a time synchronization mark into the audio stream, convert the audio stream with the time synchronization mark into the second predetermined format audio stream, and store the audio stream according to the audio number.

Preferably, as shown in Fig. 3, the audio processing unit 3 may further comprise: an audio judgment module 30, an audio converting module 32 and an audio pre-storing module 36.

The audio judgment module 30 is adapted to identify the second file and judge the audio format availability of the identified audio file, then send an audio file with an available audio format to the audio converting module 32 and send the identified picture file to the audio converting module 32;
the audio converting module 32, connected to the audio judgment module 30, is adapted to add the time synchronization mark into the received audio file, convert the received audio file with the time synchronization mark into the second predetermined format audio stream, and send the second predetermined format audio stream to the audio pre-storing module 36; and
the audio pre-storing module 36 is adapted to acquire the audio number of the second predetermined format audio stream inputted by the audio converting module 32, and store the audio stream according to the audio number.

Preferably, the audio processing unit 3 may further comprise a Text To Speech (TTS) converting module 34; wherein
the audio judgment module 30 is further adapted to judge whether the second file comprises the text file, and if the judgment result is yes, send the text file to the TTS converting module 34;
the TTS converting module 34, connected to the audio judgment module 30, is adapted to convert the received text file into the audio file by a Text To Speech (TTS) converting engine and add the time synchronization mark in the audio file, then convert the audio file with the time synchronization mark to the second predetermined format audio stream, and send the same to the audio pre-storing module 36; and
the audio pre-storing module 36, connected to the TTS converting module 34, is further adapted to acquire the audio number of the second predetermined format audio stream inputted by the TTS converting module 34, and store the audio stream according to the audio number.

The menu synthesizing unit 4, connected respectively to the video processing unit 2 and the audio processing unit 3, is adapted to generate the IVVR menu with the video stream and the audio stream.

Considering the problems in the related art that an IVVR menu is made offline which causes relatively low flexibility, relatively large limitation and the possibility of not meeting the requirements of the IVVR system, the embodiment of the present invention provides a system for generating an Interactive Voice and Video Response (IVVR) menu, and the users only need to call into the system for generating the IVVR menu, and then the IVVR menu can be automatically generated by uploading the video file, the audio file, the picture file and text file.

Preferably, the menu synthesizing unit 4 is adapted to form at least one media stream group with the corresponding audio stream and video stream, combine the at least one media stream group into a media stream group set, and generate the IVVR menu with the media stream group set, wherein the audio stream, the video stream, the at least one media stream group and the media stream group set are all less than predetermined threshold values.

The above threshold values may be the same or different threshold values, for example, a first threshold value, a second threshold value and a third threshold value will be described hereinafter, which may meet the following relationship: the third threshold value ≥ the second threshold value ≥ the first threshold value. The threshold values can be preset according to the actual situation according to the practical application.

Preferably, as shown in Fig. 3, the menu synthesizing unit 4 may further comprise:
an IVVR processing module 40, adapted to judge whether the size of the received audio stream or the received video stream is less than the first threshold value, and, if the judgment result is yes, send the audio stream or the video stream to an IVVR synthesizing module 42, otherwise, send the audio stream or the video stream to an IVVR compressing module 44;
the IVVR synthesizing module 42, adapted to form at least one media stream group with the received corresponding audio stream and video stream, judge whether the size of each media stream group is more than the second threshold value respectively, and combine the at least one media stream group into the media stream group set under the circumstance that the size of each media stream group is less than the second threshold value, then judge whether the media stream group set is less than the third threshold value, and if the judgment result is yes, generate the IVVR menu, otherwise, send the media stream group set to the IVVR compressing module, wherein the third threshold value ≥ the second threshold value ≥ the first threshold value; and
the IVVR compressing module 44, adapted to compress the received media stream according to a predetermined compression instruction, and send the compressed media stream to the IVVR processing module 40.

During the process of the practical implementation, the IVVR processing module is mainly responsible for receiving a generation instruction sent by the acquiring unit and returning the process result; packing the video stream in the video pre-storing module and the audio stream in the audio pre-storing module into a group of media stream by invoking the numbers of the video stream in the video pre-storing module and the audio stream in the audio pre-storing module; and judging the size of the group of media stream, for example, taking 64 K as the predetermined threshold value, the media stream less than 64 K is sent to the IVVR synthesizing module and the media stream more than 64 K is sent to the IVVR compressing module. The IVVR synthesizing module is mainly responsible for receiving the media stream sent by the IVVR processing module, reading out the time synchronization mark of the first frame in the media stream and the audio stream, so as to ensure that the video and audio of this group start synchronously; the IVVR synthesizing module uniformly adjusts the time interval of each group of frame in the media stream group by reading out the time synchronization mark and by calculating the length of time in the video and audio streams, synthesizes a media stream set with groups of media stream, and returns the converted set to the IVVR processing module after converting the video stream format of the set into the QCIF; the total size of the synthesized media stream set is judged, and if the total size exceeds the specified size of the video, the synthesized media stream set will be sent to the IVVR compressing module, otherwise, the IVVR menu will be generated. The IVVR compressing module is mainly responsible for compressing the received media stream after having received a compression instruction from the IVVR processing module, and returning the compressed media stream to the IVVR processing module.

A system for generating an IVVR menu is provided by the above embodiments, which is very convenient when being used, and the users can make the IVVR menu by any video telephone at any time. Moreover, the production of the IVVR menu is simple, and the production can be completed if only the video and audio or the text files required by the production are uploaded.

### Method Embodiments

A method for generating an IVVR menu is further provided according to the embodiments of the present invention.

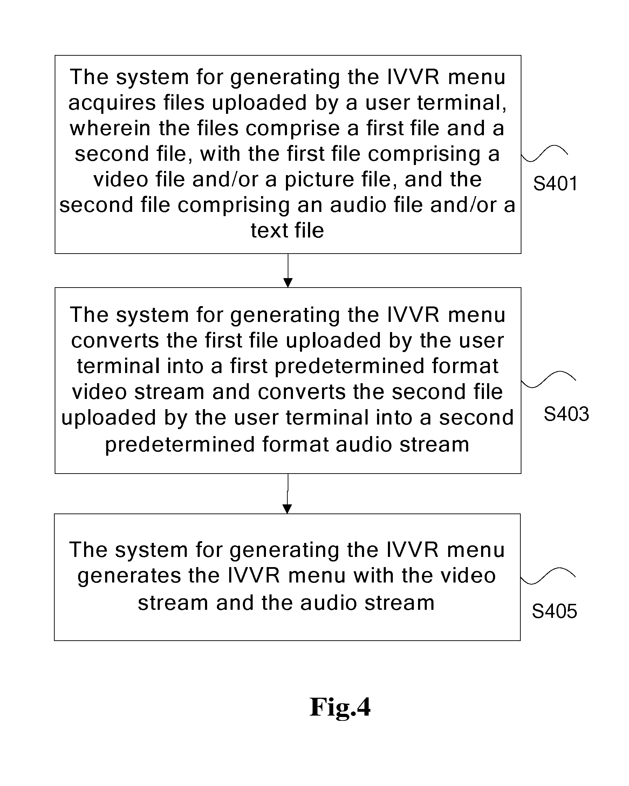

Fig. 4 is a flowchart of a method for generating an IVVR menu according to an embodiment of the present invention. In this case, the method is applied in the above system for generating the IVVR menu. As shown in Fig. 4, the method for generating the IVVR menu according to the embodiment of the present invention comprises the following processing (step S401 to step S405).

Step S401: the system for generating the IVVR menu acquires files uploaded by a user terminal, wherein the files comprise a first file and a second file, with the first file comprising a video file and/or a picture file, and the second file comprising an audio file and/or a text file.

In this step, the users can uploads the files in order according to the tips of a boot menu, wherein the order of uploading the first file and the second file is determined according to the predetermined mode of the boot interface, and the order can be adjusted in the system.

Step S403: the system for generating the IVVR menu converts the first file uploaded by the user terminal into a first predetermined format video stream and converts the second file uploaded by the user terminal into a second predetermined format audio stream.

Preferably, the step of converting the first file uploaded by the user terminal into a first predetermined format video stream comprises the following processing of:
(1) judging whether the first file comprises the video file and/or the picture file;
(2) filtering the video file under the circumstance that the first file comprises the video file, so as to acquire a pure video stream, adding a time synchronization mark, and converting the pure video stream with the time synchronization mark into the first predetermined format video stream, and/or sorting the picture file according to a predetermined frame interval to form a video stream under the circumstance that the first file comprises the picture file, adding the time synchronization mark, and converting the video stream with the time synchronization mark into the first predetermined format video stream; and
(3) acquiring a video number of the converted first predetermined format video stream, and storing the video stream according to the video number.

Preferably, the step of converting the second file uploaded by the user terminal into a second predetermined format audio stream comprises the following processing of:
(1) judging whether the second file comprises the audio file and/or the text file;
(2) judging the audio format availability of the audio file to acquire an audio file with an available audio format under the circumstance that the second file comprises the audio file, adding a time synchronization mark into the audio file with the available audio format, and converting the audio file with the time synchronization mark into the second predetermined format audio stream, and/or converting the text file into the audio file by a Text To Speech (TTS) converting engine under the circumstance that the second file comprises the text file, adding the time synchronization mark into the audio file, and converting the audio file with the time synchronization mark into the second predetermined format audio stream; and
(3) acquiring an audio number of the converted second predetermined format audio stream, and storing the audio stream according to the audio number.

Step S405: the system for generating the IVVR menu generates the IVVR menu with the video stream and the audio stream.

Preferably, Step S405 may particularly comprise the following processing of:
(1) judging whether the size of the audio stream or the video stream is more than a first threshold value;
(2) if the judgment result is yes, compressing the audio stream or the video stream according to a predetermined compression instruction, otherwise, forming at least one media stream group with the received corresponding audio stream and video stream, and judging whether the size of each media stream group is more than a second threshold value respectively;
(3) combining the at least one media stream group into a media stream group set under the circumstance that the size of each media stream group is less than the second threshold value, and judging whether the media stream group set is less than a third threshold value, wherein the third threshold value ≥ the second threshold value ≥ the first threshold value; and
(4) generating the IVVR menu under the circumstance that the media stream group set is less than the third threshold vale, otherwise, compressing the media stream group set according to the predetermined compression instruction.

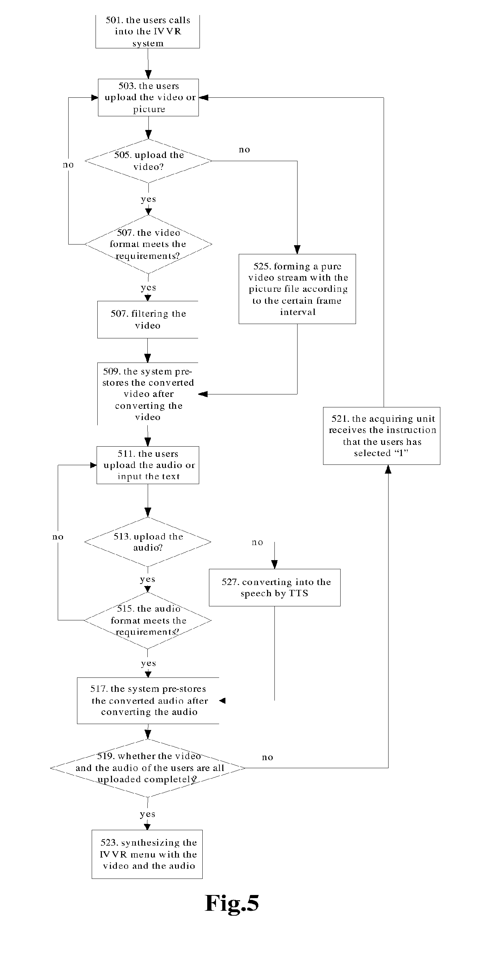

Fig. 5 is a flowchart of a method for generating an IVVR menu according to a preferred embodiment of the present invention. As shown in Fig. 5, the method for generating the IVVR menu according to the preferred embodiment of the present invention comprises the following processing (step S501 to step S527):

It is assumed that a user want to make an IVVR menu. In this case, the menu is synthesized by one video file, one picture, one audio and one text to speech audio. The name of the one video file is "a" (the format is the 3GP, the frame rate is 10fps, the I-frame interval is 5s, the length of time is 20s and the size is 70k), the name of the one picture file is "b" (the format is the gif, the frame rate is 1fps, the length of time is 5s and the size is 12k), the name of the one audio file is "c" (the format is the AMR, the length of time is 10s and the size is 12k), and the content of the one text is "Hello, welcome to use the system for making the IVVR menu". The user dials the access code of the system for generating the IVVR menu by using the 3G mobile phone and enters into the IVVR system. The solution will be described in combination with the system described in Fig. 2 and Fig. 3.

Step S501: the mobile phone interface of the user receives the guide tip "Please upload the video file or the picture file" of the acquiring unit 1, and the user uploads the "a" file according to the particular guide steps, and the acquiring unit sets the file's number as 1-1 after having received the file and sends the file to the video processing unit 2.

Step S503: the video judgment module 20 in the video processing unit 2 determines that the file is the video file after having received the "a" file, and returns the instruction to the acquiring unit 1. If the judgment result is that the file is an image, then enter step S525.

Step S505: the video judgment module 20 determines that the video file format is the 3GP which meets the video format specified by the system, and then sends the video file to the video filtering module 22.

Step S507: the video filtering module 22 filters the audio contents in the video file to generate a pure video stream, and sends the pure video stream to the video converting module 26.

Step S509: the video converting module 26 receives the pure video stream and converts the media format of the pure video stream into the H263 format, then adjusts the frame rate to 8fps, sets the first frame as 2s, and sends it to video pre-storing module 28 after having added a time synchronization mark thereto. The video pre-storing module 28 stores the received video stream with the number of 1-1 to the first position in the video processing unit 2.

Step S511: the acquiring unit 1 prompts the user to upload the audio or input the text when having received the instruction that the video has been uploaded successfully. The user uploads the "c" file according to the guide steps, and the acquiring unit 1 sets the file's number as 1-2 after having received the file "c" and sends it to the audio processing unit 3.

Step S513: audio judgment module 30 in the audio processing unit 3 determines that the file is the audio file after having received the file "c" uploaded by the user, and sends the audio file to the audio converting module 32 in the audio processing unit 3. If the audio judgment module 30 determines that the user has inputted the text, then sends it to the TTS converting module 34, and enters step S527.

Step S515: the audio converting module 32 determines that the audio's media format is the AMR after having received the audio file "c", and returns the instruction that the reception is successful to the acquiring unit 1; and if the judgment result is that the audio file is not the AMR format, then enters step S511.

Step S517: the audio converting module 32 converts the audio bit rates of the audio stream into the bit rates specified uniformly by the system, and sends the audio stream to the audio pre-storing module 36 after adding the time synchronization mark. The audio pre-storing module 36 stores the received audio stream with the number of 1-2 to the first position in the audio processing unit 3.

Step S519: the acquiring unit 1 prompts the user that "the audio has been uploaded successfully, press 1 to upload the next video or the image, and press # to end" when having received the instruction that the audio has been uploaded successfully.

Step S521: the acquiring unit 1 receives the instruction that the user has selected "1", repeats Step S501 to Step S513, so as to complete the upload of one image "b" and the input of one text "Hello, welcome to use the system for making the IVVR menu" and set the numbers of which as 2-1 and 2-2 respectively.

Step S523: the acquiring unit 1 guides the user to press "#" to confirm that the files are all uploaded, and at the same time, sends a command of generating the IVVR menu to the menu synthesizing unit. The IVVR processing module 40 of the menu synthesizing unit 4 receives the video stream and the audio stream with the number of 1 which is extracted from the video pre-storing module 28 and the audio pre-storing module 36, reads out the time synchronization information of the first frame in the video stream and the audio stream, packs the video stream and the audio stream into a first group of the media stream group by taking the duration of the video or the audio which has longer duration as the standard duration of the media stream group, and sends the time synchronization mark of the media stream group to the IVVR synthesizing module 42; the IVVR processing module 40 calculates the size of the media stream group, and if the calculation result is that the size of the media stream group is more than a first threshold value (such as 64k), sends the media stream group to the IVVR compressing module 44 to be compressed. The IVVR compressing module 44 receives the media stream group and compresses this received media stream group into a media stream of which the size is less than a second threshold value (such as 64k), and then returns the compressed media stream to the IVVR processing module 40. The IVVR synthesizing module 42 adjusts the time interval of I-frame after having read out the group synchronization mark of media stream groups of the IVVR processing module 40, synthesizes these groups into a media stream set, and returns the media stream set to the IVVR processing module 40. The IVVR processing module 40 calculates the size of the media stream set, judges whether the size of the media stream set is more than a third threshold value (such as 64k), and sends the media stream set of which the size is more than 64k to the IVVR compressing module 44 to be compressed, otherwise, sends this media stream set to the IVVR synthesizing module 42. The IVVR synthesizing module 42 receives the media stream set, converts the format of the set into the Quarter Common Intermediate Format (QCIF) and synthesizes the converted media stream set as the IVVR menu.

Step S525: the video converting module 26 first forms a pure video stream with the picture file according to the certain frame interval if receiving the picture file, and enters step S509.

Step S527: the TTS converting module 34 converts the text into the speech by a TTS engine after receiving the text inputted by the user and converts the speech into the audio stream with the AMR format, and at the same time enters step S517 after adding the time synchronization mark into the audio stream, and then sends the audio stream to the audio pre-storing module 36.

By the above embodiments, a method for generating an IVVR menu is provided, achieving the effect that it is convenient for the users to make the IVVR menu, by which the generated IVVR menu meets the requirements of the IVVR system, and the total video bandwidth is less than a predetermined threshold value (such as 64k), wherein the video stream is the QCIF, the format is the 3GP, which can be read out directly by the system.

In summary, by way of the solution for generating an IVVR menu provided by the embodiments of the present invention, the users can make the IVVR menu by any video phone at any time, and the users can complete the making if only they upload the video and audio or the text files required by the making, which achieving the effect that it is convenient for users to make the IVVR menu, and improving the wide application of the voice dialing in the home and the office.

Obviously, those skilled in the art shall understand that the above modules and steps of the present invention can be realized by using general purpose calculating device, can be integrated in one calculating device or distributed on a network which consists of a plurality of calculating devices. Alternatively, the modules and steps of the present invention can be realized by using the executable program code of the calculating device. Consequently, they can be stored in the storing device and executed by the calculating device, or they are made into integrated circuit module respectively, or a plurality of modules or steps thereof are made into one integrated circuit module. In this way, the present invention is not restricted to any particular hardware and software combination.

Above description is only to illustrate the preferred embodiments but not to limit the present invention. Various alterations and changes to the present invention are apparent to those skilled in the art. The scope defined in claims shall cover any modification, equivalent substitution and improvement within the spirit and principle of the present invention.

## Claims

1. A system for generating an Interactive Voice and Video Response (IVVR) menu, **characterized by** comprising:
an acquiring unit, adapted to acquire files uploaded by a user terminal, wherein the uploaded files comprise a first file and a second file, with the first file comprising a video file and/or a picture file, and the second file comprising an audio file and/or a text file;
a video processing unit, adapted to convert the first file uploaded by the user terminal into a first predetermined format video stream;
an audio processing unit, adapted to convert the second file uploaded by the user terminal into a second predetermined format audio stream; and
a menu synthesizing unit, adapted to generate the IVVR menu with the video stream and the audio stream.

2. The system according to Claim 1, **characterized in that**
the video processing unit is adapted to acquire a video stream in the first file, add a time synchronization mark into the video stream, convert the video stream with the time synchronization mark into the first predetermined format video stream, and store the video stream according to a video number.

3. The system according to Claim 1, **characterized in that** the video processing unit comprises:
a video judgment module, adapted to judge whether the first file comprises the video file, and if the judgment result is yes, send the video file to a video filtering module;
the video filtering module, adapted to filter the video file to acquire a pure video stream, and send the pure video stream to a video converting module;
the video converting module, adapted to add a time synchronization mark into the inputted pure video stream, convert the pure video stream with the time synchronization mark into the first predetermined format video stream, and output the first predetermined format video stream to a video pre-storing module; and
the video pre-storing module, adapted to acquire a video number of the first predetermined format video stream inputted by the video converting module, and store the video stream according to the video number.

4. The system according to Claim 3, **characterized in that** the video processing unit further comprises a picture converting module, wherein
the video judgment module is further adapted to judge whether the first file comprises the picture file, and if the judgment result is yes, send the picture file to the picture converting module;
the picture converting module is adapted to sort the inputted picture file according to a predetermined frame interval to form the pure video stream, add the time synchronization mark into the pure video stream, convert the pure video stream with the time synchronization mark into the first predetermined format video stream, and output the first predetermined format video stream to the video pre-storing module; and
the video pre-storing module is further adapted to acquire a video number of the first predetermined format video stream inputted by the picture converting module, and store the video stream according to the video number.

5. The system according to Claim 1, **characterized in that**
the audio processing unit is adapted to acquire an audio stream in the second file, add a time synchronization mark into the audio stream, convert the audio stream with the time synchronization mark into the second predetermined format audio stream, and store the audio stream according to an audio number.

6. The system according to Claim 1, **characterized in that** the audio processing unit comprises:
an audio judgment module, adapted to judge whether the second file comprises the audio file, and, if the judgment result is yes, send the audio file to an audio converting module;
the audio converting module, adapted to add a time synchronization mark into the audio file inputted by the audio judgment module, convert the audio file with the time synchronization mark into the second predetermined format audio stream, and send the second predetermined format audio stream to an audio pre-storing module; and
the audio pre-storing module, adapted to acquire an audio number of the second predetermined format audio stream inputted by the audio converting module, and store the audio stream according to the audio number.

7. The system according to Claim 6, **characterized in that** the audio processing unit further comprises a Text To Speech (TTS) converting module, wherein
the audio judgment module is further adapted to judge whether the second file comprises the text file, and if the judgment result is yes, send the text file to the TTS converting module;
the TTS converting module is adapted to convert the received text file into the audio file by a Text To Speech (TTS) converting engine and add the time synchronization mark into the audio file, convert the audio file with the time synchronization mark into the second predetermined format audio stream, and send the second predetermined format audio stream to the audio pre-storing module; and
the audio pre-storing module is further adapted to acquire the audio number of the second predetermined format audio stream inputted by the TTS converting module, and store the audio stream according to the audio number.

8. The system according to Claim 1, **characterized in that**
the menu synthesizing unit is adapted to form at least one media stream group with the corresponding audio stream and video stream, combine the at least one media stream group into a media stream group set, and generate the IVVR menu with the media stream group set, wherein the audio stream, the video stream, the at least one media stream group and the media stream group set are all less than predetermined threshold values.

9. The system according to Claim 1, **characterized in that** the menu synthesizing unit comprises:
an IVVR processing module, adapted to judge whether the size of the received audio stream or the received video stream is less than a first threshold value, and if the judgment result is yes, send the audio stream or the video stream to an IVVR synthesizing module, otherwise, send the audio stream or the video stream to an IVVR compressing module;
the IVVR synthesizing module, adapted to form at least one media stream group with the received corresponding audio stream and video stream, judge whether the size of each media stream group is more than a second threshold value respectively, and combine the at least one media stream group into a media stream group set under the circumstance that the size of each media stream group is less than the second threshold value, then judge whether the media stream group set is less than a third threshold value, and if the judgment result is yes, generate the IVVR menu, otherwise, send the media stream group set to the IVVR compressing module, wherein the third threshold value ≥ the second threshold value ≥ the first threshold value; and
the IVVR compressing module, adapted to compress the received media stream according to a predetermined compression instruction, and send the compressed media stream to the IVVR processing module.

10. A method for generating an Interactive Voice and Video Response (IVVR) menu, **characterized by** comprising:
acquiring, by a system for generating IVVR menu, files uploaded by a user terminal, wherein the files comprise a first file and a second file, with the first file comprising a video file and/or a picture file, and the second file comprising an audio file and/or a text file;
converting the first file uploaded by the user terminal into a first predetermined format video stream, and converting the second file uploaded by the user terminal into a second predetermined format audio stream; and
generating the IVVR menu with the video stream and the audio stream.

11. The method according to Claim 10, **characterized in that** the step of converting the first file uploaded by the user terminal into a first predetermined format video stream comprises:
judging whether the first file comprises the video file;
filtering the video file to acquire a pure video stream under the circumstance that the first file comprises the video file;
adding a time synchronization mark into the pure video stream, and converting the pure video stream with the time synchronization mark into the first predetermined format video stream; and
acquiring a video number of the converted first predetermined format video stream, and storing the video stream according to the video number.

12. The method according to Claim 10, **characterized in that** the step of converting the first file uploaded by the user terminal into a first predetermined format video stream further comprises:
judging whether the first file comprises the picture file;
sorting the picture file according to a predetermined frame interval to form a pure video stream under the circumstance that the first file comprises the picture file;
adding a time synchronization mark into the pure video stream, and converting the pure video stream with the time synchronization mark into the first predetermined format video stream; and
acquiring a video number of the converted first predetermined format video stream, and storing the video stream according to the video number.

13. The method according to Claim 10, **characterized in that** the step of converting the second file uploaded by the user terminal into a second predetermined format audio stream comprises:
judging whether the second file comprises the audio file;
judging the audio format availability of the audio file to acquire an audio file with an available audio format under the circumstance that the second file comprises the audio file;
adding a time synchronization mark into the audio file with the available audio format, and converting the audio file with the available audio format into the second predetermined format audio stream; and
acquiring an audio number of the converted second predetermined format audio stream, and storing the audio stream according to the audio number.

14. The method according to Claim 10, **characterized in that** the step of converting the second file uploaded by the user terminal into a second predetermined format audio stream further comprises:
judging whether the second file comprises the text file;
converting the text file into the audio file by a Text To Speech (TTS) converting engine under the circumstance that the second file comprises the text file;
adding a time synchronization mark into the audio file, and converting the audio file with the time synchronization mark into the second predetermined format audio stream; and
acquiring an audio number of the converted second predetermined format audio stream, and storing the audio stream according to the audio number.

15. The method according to any one of Claims 10 to 14, **characterized in that** the step of generating the IVVR menu with the video stream and the audio stream comprises:
forming at least one media stream group with the received corresponding audio stream and video stream under the circumstance that the size of the audio stream or the video stream is less than a first threshold value respectively, and judging whether the size of each media stream group is more than a second threshold value respectively;
combining the at least one media stream group into a media stream group set under the circumstance that the size of each media stream group is less than the second threshold value, and judging whether the media stream group set is less than a third threshold value, wherein the third threshold value ≥ the second threshold value ≥ the first threshold value; and
generating the IVVR menu under the circumstance that the media stream group set is less than the third threshold vale, otherwise, compressing the media stream group set according to a predetermined compression instruction.
